# EUROPÄISCHE PATENTSCHRIFT

(11) **EP 3 353 224 B1**
(45) Veröffentlichungstag und Bekanntmachung des Hinweises auf die Patenterteilung: **25.03.2020**
(21) Anmeldenummer: 16766562.9
(22) Anmeldetag: 19.09.2016
(51) Int. Cl.: C08G 18/62, C08G 18/73, C09D 5/00, C08G 18/78, C09D 175/14

(54) **ZWEIKOMPONENTIGE-BESCHICHTUNGSMASSEN**
TWO-COMPONENT COATING COMPOUNDS
MASSE DE REVÊTEMENT À DEUX CONSTITUANTS

(30) Priorität: 23.09.2015 EP 15186524
(43) Veröffentlichungstag der Anmeldung: 01.08.2018
(73) Patentinhaber: BASF SE, 67056 Ludwigshafen am Rhein (DE)
(72) Erfinder: ROLLER, Sebastian, 68167 Mannheim (DE); TROMSDORF, Ulrich, 69123 Heidelberg (DE); AL-HELLANI, Rabie, 67059 Ludwigshafen (DE); LUCAS, Frederic, 68159 Mannheim (DE); KIRSCH, Stefan, 55268 Nieder-Olm (DE)
(74) Vertreter: BASF IP Association
(86) Internationale Anmeldenummer: PCT/EP2016/072096
(87) Internationale Veröffentlichungsnummer: WO 2017/050667

(56) Entgegenhaltungen:
- US-A1- 2003 143 414

## Beschreibung

Die vorliegende Erfindung betrifft zweikomponentige Beschichtungsmassen, die eine wasseremulgierbare Polyisocyanatkomponente enthaltend
a) mindestens ein Polyisocyanat und
b) mindestens ein Umsetzungsprodukt mindestens eines Polyisocyanats b1) mit Verbindungen b2) mit mindestens einer hydrophilen, nicht gegenüber Isocyanat reaktiven Gruppe (Gruppe A) und mindestens einer gegenüber Isocyanat reaktiven Gruppe (Gruppe B)
und eine
Polyacrylatkomponente enthaltend
eine wässrige Polymerdispersion c) mindestens eines hydroxyfunktionellen Poly(meth)acrylats mit bi- oder höhermodaler Teilchengrößenverteilung
enthalten,
sowie Verfahren zu deren Herstellung und deren Verwendung.

Unter bi- oder höhermodal in Bezug auf die bi- oder höhermodalere Teilchengrößenverteilung ist zu verstehen, dass die wässrige Polymerdispersion c) Teilchen mit mindestens zwei verschiedenen und voneinander getrennten Maxima in ihrer Teilchengrößenverteilungskurve (oder um mindestens zwei verschiedene und voneinander getrennte Maxima in seiner Teilchengrößenverteilungskurve gruppierte Teilchen) (Gew.-% oder Intensität = Ordinate oder y-Achse, Größe= Abszisse oder x-Achse) enthält, wohingegen monomodal in bezug auf die wässrige Polymerdispersion c) bedeutet, dass die wässrige Polymerdispersion c) Teilchen mit einem einzigen Maximum in ihrer Teilchengrößenverteilungskurve (oder um ein einziges Maximum in seiner Teilchengrößenverteilungskurve gruppierte Teilchen) enthält. Unter gewichtsmittlere Teilchengröße (Dw) ist der Durchmesser des Teilchens zu verstehen, da die Teilchen in der Regel im Wesentlichen kugelförmig sind und für praktische Zwecke als vorzugsweise kugelförmig erachtet werden.

Wasseremulgierbare Polyisocyanatkomponenten werden wässrigen Polymerdispersionen als Vernetzungsmittel zugesetzt und sind in der Literatur vielfach beschrieben. Die Wasseremulgierbarkeit wird dadurch erreicht, dass man einen Teil der Isocyanatgruppen der Polyisocyanate mit hydrophilen Verbindungen umsetzt oder derartig hydrophil-modifizierte Polyisocyanate mit konventionellen Polyisocyanaten abmischt.

Aus der WO 91/384112 A1 sind Polymerdispersionen mit mindestens bimodaler Teilchengrößenverteilung bekannt. In der Beschreibung ist neben zahlreichen anderen Modifikationen auch die Möglichkeit einer Hydroxy-Funktionalisierung genannt. Außerdem wird dabei auch auf die Möglichkeit einer Reaktion mit Polyisocyanaten als eine von vielen hingewiesen. Vorteile dieser Polymerdispersionen in zweikomponentigen Systemen hinsichtlich Viskosität und Filmeigenschaften sind nicht beschrieben.

Die US 5744544 beschriebt bi- oder multimodale Dispersionen zur Erreichung sehr hoher Feststoffgehalte, wobei mindestens eine Teilchengrößenpopulation einen Durchmesser > 1µm aufweist. Eigenschaften dieser Polymerdispersionen in zweikomponentigen Systemen werden nicht beschrieben.

Aufgabe der vorliegenden Erfindung war es, zweikomponentige Beschichtungsmassen zur Verfügung zu stellen, die Vorteile hinsichtlich der Viskosität, der Trocknung, des Einrührverhaltens des (Polyisocyanat-)Vernetzungsmittels und der Filmoptik/Glanz zeigen.

Demgemäß wurden die oben definierten zweikomponentigen Beschichtungsmassen, ihre Verwendung in Lacken und Anstrichmitteln , sowie ein Verfahren zu deren Herstellung gefunden.

Die zweikomponentigen Beschichtungsmassen enthalten eine Polyisocyanatkomponente und eine Polyacrylatkomponente.

Die wasseremulgierbare Polyisocyanatkomponente enthält als Komponente a) mindestens ein Polyisocyanat.

Mindestens ein Polyisocyanant bedeutet ein Polyisocyanat oder eine Mischung aus zwei oder mehr Polyisocyanaten unterschiedlicher Zusammensetzung, bevorzugt ist ein Polyisocyanat. Es versteht sich, dass der Ausdruck -ein Polyisocyanat- ebenfalls ein Gemisch von Polyisocyanaten umfasst, welche sich lediglich in ihrer Kettenlänge und/oder in der Anordnung der Monomere in der Polymerkette unterscheiden.

Das mindestens eine Polyisocyanat kann durch Polymerisation von monomeren aromatischen, aliphatischen und/oder cycloaliphatischen Isocyanaten, bevorzugt von aliphatischen und/oder cycloaliphatischen (in dieser Schrift kurz (cyclo)aliphatische) Isocyanaten und besonders bevorzugt von aliphatischen Isocyanaten hergestellt werden.

Aromatische Isocyanate sind solche, die mindestens ein aromatisches Ringsystem enthalten, also sowohl rein aromatische wie auch araliphatische Verbindungen. Unter ersteren werden Isocyanate verstanden, bei denen die Isocyanatogruppen direkt an aromatische Ringsysteme gebunden sind, wohingegen bei letzteren die Isocyanatogruppen an Alkylengruppen gebunden sind, aber die Verbindungen auch aromatische Ringsysteme enthalten, wie es beispielsweise bei α,α,α',α'-Tetramethyl-1,3-xylylendiisocyanat (TMXDI) der Fall ist.
Cycloaliphatische Isocyanate sind solche, die mindestens ein cycloaliphatisches Ringsystem enthalten.
Aliphatische Isocyanate sind solche, die ausschließlich gerade oder verzweigte Kohlenstoffketten enthalten, also acyclische Verbindungen.

Bei den monomeren aromatischen, aliphatischen und/oder cycloaliphatischen Isocyanaten kann es sich jeweils um gleiche oder unterschiedliche Isocyanate handeln.

Bei den monomeren aromatischen, aliphatischen und/oder cycloaliphatischen Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.
Es kommen prinzipiell auch höhere Isocyanate mit im Mittel mehr als zwei Isocyanatgruppen in Betracht. Dafür eignen sich beispielsweise Triisocyanate wie Triisocyanatononan, 2'-Iso-cyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten.

Die monomeren aromatischen, aliphatischen und/oder cycloaliphatischen Isocyanate weisen keine wesentlichen Umsetzungsprodukte der Isocyanatgruppen mit sich selbst auf.

Bei den monomeren aromatischen, aliphatischen und/oder cycloaliphatischen Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylen-diisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat), Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methyl-cyclohexan sowie 3- (bzw. 4-), 8- (bzw. 9-)Bis(isocyanatomethyl)-tricyclo[5.2.1.02.6]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocy-anatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30 bis 90:10.

Dicyclohexylmethan-4,4'-diisocyanat kann ebenfalls als Gemisch der verschiedenen cis- und trans-Isomere vorliegen.

Als Diisocyanate können sowohl solche Diisocyanate eingesetzt werden, die durch Phosgenierung der korrespondierenden Amine erhalten werden, als auch solche, die ohne die Verwendung von Phosgen, d.h. nach phosgenfreien Verfahren, hergestellt werden. Nach Angaben der EP-A-126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexa-methylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Reaktionsprodukten auf, was beispielsweise in Anwendungen in der Elektronikindustrie vorteilhaft ist, ohne darauf beschränkt zu sein.

Es kann vorteilhaft sein, wenn die eingesetzten Isocyanate einen Gesamtgehalt an hydrolysierbarem Chlor von weniger als 200 ppm aufweisen, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Das mindestens eine Polyisocyanat, zu dem die monomeren Isocyanate polymerisiert werden können, ist in der Regel wie folgt charakterisiert:
Die mittlere NCO-Funktionalität des mindestens einen Polyisocyanats beträgt in der Regel mindestens 1,8 und kann bis zu 8 betragen, beispielsweise bis zu 6, bevorzugt 2 bis 5 und besonders bevorzugt 2,4 bis 4.

Der Gehalt an Isocyanatgruppen nach der Polymerisierung, berechnet als NCO = 42 g/mol, beträgt, wenn nicht anders angegeben, in der Regel von 5 bis 30 Gew%.

Bevorzugt handelt es sich bei dem mindestens einen Polyisocyanat um folgende Verbindungen:
1) Ein oder mehrere Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanatoisocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkylisocyanurate, welche cyclische Trimere der Diisocyanate darstellen, oder um Gemische mit ihren höheren, mehr als einen Isocyanuratring aufweisenden Homologen. Die Isocyanatoisocyanurate haben im Allgemeinen einen NCO-Gehalt von 10 bis 30 Gew.-%, insbesondere 15 bis 25 Gew.-% und eine mittlere NCO-Funktionalität von 2,6 bis 8. Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 Gew.-% bezogen auf das Polyisocyanat.
2) Ein oder mehrere Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Uretdiongruppen aufweisende Polyisocyanate werden häufig im Gemisch mit anderen Polyisocyanaten, insbesondere den unter Punkt 1) genannten, erhalten. Uretdiongruppen aufweisende Polyisocyanate weisen üblicherweise NCO-Funktionalitäten von 2 bis 3 auf.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Ein oder mehrere Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Ein oder mehrere Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5.
   Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Urethan- und/oder Allophanatgruppen aufweisende Polyisocyanate treten häufig in Mischformen mit den unter Punkt 1) genannten Polyisocyanaten auf.
5) Ein oder mehrere Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate könne aus Diisocyanat und Kohlendioxid zugänglich sein.
6) Ein oder mehrere Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind zum Beispiel aus Diisocyanaten mittels spezieller Katalysatoren herstellbar.
7) Ein oder mehrere Uretonimin-modifizierte Polyisocyanate.
8) Ein oder mehrere Carbodiimid-modifizierte Polyisocyanate.
9) Ein oder mehrere Hyperverzweigte Polyisocyanate, wie sie beispielsweise bekannt sind aus der DE-A 10013186 oder DE-A 10013187.
10) Die unter den vorgenannten Punkten beschriebenen Polyisocyanate 1)-9), bevorzugt 1), 2), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.
11) Polyisocyanate, die neben den unter 1) bis 10) beschriebenen Gruppen noch solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Es kann vorteilhaft sein, wenn das mindestens eine Polyisocyanat ausgewählt ist aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

Besonders bevorzugt handelt es sich bei dem mindestens einen Polyisocyanat um ein Polyisocyanat auf Basis von aliphatischen Diisocyanaten, ganz besonders bevorzugt auf Basis von 1,6-Hexamethylendiisocyanat.

Des Weiteren besonders bevorzugt handelt es sich bei dem mindestens einen Polyisocyanat um ein Gemisch von Polyisocyanaten, ganz besonders bevorzugt von solchen auf der Basis von von 1,6-Hexamethylendiisocyanat und solchen auf der Basis von Isophorondiisocyanat.

In einer besonders bevorzugten Ausführungsform handelt es sich bei dem mindesten einen Polyisocyanat um ein Gemisch enthaltend niedrigviskose Polyisocyanate, bevorzugt niedrigviskose Isocyanuratgruppen enthaltende Polyisocyanate, mit einer Viskosität von 600 bis 3500 mPa*s, insbesondere unter 1500 mPa*s, niederviskose Urethane und/oder Allophanate mit einer Viskosität von 200 bis 1600 mPa*s, insbesondere 500 bis 1500 mPa*s, und/oder Iminooxadiazindiongruppen enthaltende Polyisocyanate mit einer Viskosität von 400 bis 2000 mPa*s, insbesondere 500 bis 1500 mPa*s.

Die in dieser Schrift angegebenen Viskositätswerte werden.gemäß DIN EN ISO 3219/A.3 (Oktober 1994) bei 23 °C mit einem Kegel-Platte-System mit einem Geschwindigkeitsgefälle von 1000 s⁻¹ bestimmt, falls nicht anders vermerkt.
Das mindestens eine Polyisocyanat kann beispielsweise nach Methoden hergestellt werden, die dem Fachmann bekannt sind.

Das Verfahren zur Herstellung des mindestens einen Polyisocyanats kann erfolgen, wie in WO 2008/68198 beschrieben, dort besonders von Seite 20, Zeile 21 bis Seite 27, Zeile 15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei.

In den Verfahren zur Herstellung des mindestens einen Polyisocyanats können thermisch nichtlabile als auch thermisch labile Katalysatoren eingesetzt werden.

Werden in dem Verfahren zur Herstellung des mindestens einen Polyisocyanats thermisch labile Katalysatoren eingesetzt, ist es weiterhin auch möglich, die Reaktion abzubrechen durch Erhitzen des Reaktionsgemischs auf eine Temperatur oberhalb von mindestens 80 °C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.
Di-, Tri- und höhere Polyisocyanate können beispielsweise durch Phosgenierung von entsprechenden Anilin/Formaldehyd-Kondensaten erhalten werden und Methylenbrücken aufweisende Polyphenylpolyisocyanate darstellen.

Die wasseremulgierbare Polyisocyanatkomponente enthält als Komponente b) mindestens ein Umsetzungsprodukt mindestens eines Polyisocyanates b1) mit mindestens einer Verbindung b2).
Mindestens ein Umsetzungsprodukt bedeutet ein Umsetzungsprodukt oder eine Mischung aus zwei oder mehr Umsetzungsprodukten, welche sich in den Komponenten b1) und/oder b2) unterscheiden, bevorzugt ist ein Umsetzungsprodukt.

Das mindestens eine Polyisocyanat kann mit dem mindestens einem unter a) beschrieben Polyisocyanat gleich oder verschieden sein. Bevorzugt ist das mindestens eine unter b1) verwendete Polyisocyanat mit dem mindestens einen Polyisocyanat unter a) gleich.

Mindestens eine Verbindung b2) bedeutet eine Mischung aus zwei oder mehr unterschiedlichen Verbindungen b2), bevorzugt ist eine Verbindung b2).

Die mindestens eine Verbindung b2) kann ein Monomer, Oligomer oder Polymer sein.

Die mindestens eine Verbindung b2) enthält mindestens eine gegenüber Isocyanat reaktive Gruppe (Gruppe B).

Unter einer mit Isocyanat reaktiven Gruppe (Gruppe B) ist im Rahmen dieser Erfindung eine Gruppe zu verstehen, die über mit NCO-Gruppen reaktive Wasserstoffatome verfügt oder die mit NCO-Gruppen unter den normalen Verfahrensbedingungen bei der Umsetzung eine Additionsverbindung eingehen kann. Diese Verfahrensbedingungen sind dem Fachmann an sich bekannt.

Beispielsweise ist diese Gruppe B eine Hydroxy-, Mercapto-, primäre oder sekundäre Aminogruppe (kurz NH-Gruppe), ein Epoxid, eine Säureanhydrid- oder eine Carbodiimidgruppe. Bevorzugt ist eine Hydroxy-, Mercapto- oder primäre oder sekundäre Aminogruppe (kurz NH-Gruppe). Besonders bevorzugt ist eine Hydroxygruppe.

Die mindestens eine Verbindung b2) enthält mindestens eine hydrophile, nicht gegenüber Isocyanat reaktiven Gruppe (Gruppe A).

Unter einer nicht gegenüber Isocyanat reaktiven Gruppe (Gruppe A) ist im Rahmen dieser Erfindung eine Gruppe zu verstehen, die mit NCO-Gruppen unter den normalen Verfahrensbedingungen bei der Umsetzung keine Additionsverbindung eingehen kann. Diese Verfahrensbedingungen sind dem Fachmann an sich bekannt.

Bei der Gruppe A kann es sich zum Beispiel um eine ionische oder in eine ionische Gruppe überführbare Gruppe handeln.

Anionische bzw. in anionische Gruppen überführbare Gruppen sind zum Beispiel Carbonsäure- oder Sulfonsäuregruppen.
Kationische bzw. in kationische Gruppen überführbare Gruppen sind zum Beispiel quaternäre Ammoniumgruppen bzw. (tertiäre) Aminogruppen.

In ionische Gruppen überführbare Gruppen werden vorzugsweise vor oder während der Dispergierung der erfindungsgemäßen Mischung in Wasser in ionische Gruppen überführt. Besonders bevorzugt werden die in ionische Gruppen überführbaren Gruppen bereits vor der Umsetzung mit dem Polyisoyanat in ionische Gruppen überführt.

Zur Überführung zum Beispiel von Carbonsäuregruppen oder Sulfonsäuregruppen in anionische Gruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung von tertiären Aminogruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations und Quarternierungsmittel sind z.B. in der US-PS 3 479 310, Spalte 6, beschrieben.

Der Gehalt der ionischen Gruppen bzw. in ionische Gruppen überführbare Gruppen beträgt vorzugsweise 0,5 bis 30 mol pro kg, besonders bevorzugt 2 bis 15 mol pro kg der Summe der Komponenten a) und b).

Bei der Gruppe A kann es sich zum Beispiel um eine nichtionische, hydrophile Gruppe handeln.

Nichtionische Gruppen sind z.B. Polyalkylenethergruppen, insbesondere solche mit 3 bis 80, besonders bevorzugt solche mit 5 bis 25, ganz besonders bevorzugt solche mit 5 bis 15 Alkylenoxideinheiten.

Bevorzugt sind Polyethylenethergruppen oder Polyalkylenethergruppen, die neben anderen Alkylenoxideinheiten, z.B. Propylenoxid, mindestens 5 Ethylenoxideinheiten enthalten.

Der Gehalt der hydrophilen nichtionischen Gruppen, insbesondere der Polyalkylenethergruppen beträgt vorzugsweise 0,5 bis 20, besonders bevorzugt 1 bis 30 Gew.-%, bezogen auf die Summe der Komponenten a) und b).

Geeignet als mindestens eine Verbindung b2) sind zum Beispiel aliphatische, cycloaliphatische, araliphatische oder aromatisch Hydroxycarbonsäuren, wie beispielsweise Hydroxypivalinsäure, oder Hydroxy- bzw. Aminsulfonsäuren.

Bevorzugt handelt es sich bei der mindentens einen Verbindung b2) um Mercaptoessigsäure, Mercaptopropionsäure, Thiomilchsäure, Mercaptobernsteinsäure, Glycin, Iminodiessigsäure, Sarkosin, Alanin, b-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-Cyclohexylamino-propansulfonsäure, N-Cyclohexylaminoethansulfonsäure sowie deren Alkali-, Erdalkali- oder Ammoniumsalze und besonders bevorzugt um die genannten Monohydroxycarbon- und -sulfonsäuren sowie Monoaminocarbon- und -sulfonsäuren.

Ebenfalls bevorzugt handelt es sich der mindestens einen Verbindung b2) um Polyalkylenetheralkohole, besonders bevorzugt um Polyethylenetheralkohole.

Die Polyalkylenetheralkohole und Polyethylenetheralkohole weisen bevorzugt ein Molekulargewicht Mₙ von mindestens 250, besonders bevorzugt mindestens 300 g/mol auf. Das Molekulargewicht Mₙ kann prinzipiell nach oben unbegrenzt sein, bevorzugt bis zu 5.000, besonders bevorzugt bis zu 1.200 g/mol und ganz besonders bevorzugt bis zu 800 g/mol betragen. Bevorzugte OH-Zahlen der Polyalkylenetheralkohole und Polyethylenetheralkohole, gemessen gemäß DIN 53240-2 (November 2007) (potentiometrisch), sind 40-200 mg KOH/g Festharz, bevorzugt 50-160 mg KOH/g Festharz.

Zur Herstellung Komponente b) wird das mindestens eine Polyisocyanat b1) umgesetzt mit mindestens einer Verbindung b2).

Die Herstellung der Komponente b) ist zum Beispiel aus der DE-A-35 21 618,
DE-A-40 01 783 und DE-A-42 03 51 O bekannt.

Bei der Herstellung kann die mindestens eine Verbindung b2) mit einem Teil der Komponente a) umgesetzt und anschließend mit dem Rest der Komponente a) gemischt werden.
Die Herstellung kann aber auch so erfolgen, dass die mindestens eine Verbindung b2) zur Gesamtmenge der Komponente a) zugesetzt wird und dann die Umsetzung im selben Reaktionsgefäß durchgeführt wird.

Bevorzugte Komponenten b) sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Die Polyacrylatkomponente enthält eine wässrige Polymerdispersion c) mindestens eines hydroxyfunktionellen Poly(meth)acrylats mit bi- oder höhermodaler Teilchengrößenverteilung.

Vorzugsweise besteht die wässrige Polymerdispersion c) im Wesentlichen aus zwei oder mehr hydroxyfunktionellen Poly(meth)acrylaten mit unterschiedlichen Dw-Werten, und Wasser.

Es versteht sich, daß die Dw-Werte für das mindestens eine hydroxyfunktionelle Poly(meth)acrylat dann, wenn sie als gleich bezeichnet werden, nicht genau gleich sein müssen, sondern etwas variieren können, beispielsweise um ± 45 nm, vorzugsweise
um ± 40 nm, besonders bevorzugt um ± 30 nm und insbesondere um ± 20 nm, variieren.

Es versteht sich, daß die nachfolgend verwendeten Begriffe groß und klein in Bezug auf die Teilchengröße nur in relativem Sinne aufzufassen sind (beide sind in dem Sinne klein, dass sie Polymerdispersionen liefern).

Im Hinblick auf das mindestens eine hydroxyfunktionelle Poly(meth)acrylat ist es bevorzugt, daß der Beitrag von Teilchen (unabhängig von der Zahl der Maxima) mit einer Größe zwischen 20 und 300 nm im Bereich von 2 bis 85 Gew.-% und besonders bevorzugt von 15 bis 60 Gew.-%, bezogen auf das Gesamtgewicht an Poly(meth)acrylat, liegt. Außerdem liegt der Beitrag von Teilchen mit einer Größe zwischen 150 und 700 nm vorzugsweise im Bereich von 15 bis 98 Gew.-% und besonders bevorzugt von 40 bis 85 Gew.-%, bezogen auf das Gesamtgewicht Poly(meth)acrylat, auch wenn die kleinen Teilchen numerisch dominieren mögen. Daher liegt das Gewichtsverhältnis zwischen den großen Teilchen und den kleinen Teilchen vorzugsweise im Bereich von 15:85 bis 98:2, vorzugsweise 30:70 bis 98:2 und besonders bevorzugt 40:60 bis 85: 15.

Es kann vorteilhaft sein, wenn das mindestens eine hydroxyfunktionelle Poly(meth)acrylat eine Teilchengrößenverteilung aufweißt, in der zwei Maxima vorherrschen (d.h. bimodal). Bevorzugt liegt der gewichtsmittlere Teilchendurchmesser Dw der kleinen Teilchen vorzugsweise bei 20 bis 300 nm und besonders bevorzugt bei 30 bis 180 nm. Der gewichtsmittlere Teilchendurchmesser Dw der großen Teilchen liegt vorzugsweise bei 150 bis 700 nm und besonders bevorzugt bei 180 bis 500 nm. Der Unterschied zwischen dem gewichtsmittleren Durchmesser Dw der kleinen und der großen Teilchen beträgt vorzugsweise mindestens
50 nm, vorzugsweise mindestens 80 nm und besonders bevorzugt 100 nm.

Bevorzugte OH-Zahlen des mindestens einen hydroxyfunktionellen Poly(meth)acrylats, gemessen gemäß DIN 53240-2 (November 2007) (potentiometrisch), sind 15-250 mg KOH/g Polymethacrylat, bevorzugt 40-120 mg KOH/g.

Bei dem mindestens einen hydroxyfunktionellen Poly(meth)acrylat handelt es sich bevorzugt um hydroxygruppenhaltige Kopolymere aus mindestens einem hydroxy-gruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, a, β-un-gesättigten Carbonsäuren und anderen Monomeren.

Das mindestens eine hydroxyfunktionelle Poly(meth)acrylat kann durch Polymerisation nach üblichen Verfahren, beispielsweise über Emulsionspolymerisation hergestellt werden. Vorzugsweise werden hydroxyfunktionellen Monomere im Gemisch mit anderen polymerisierbaren, bevorzugt radikalisch polymerisierbaren Monomeren, copolymerisiert.

Die hydroxyfunktionellen Monomere können bevorzugt in solchen Mengen bei der Kopolymerisation mit verwendet werden, dass die obengenannten Hydroxylzahlen des mindestens einen hydroxyfunktionellen Poly(meth)acrylats resultieren, die im allgemeinen einem Hydroxygruppengehalt des mindestens einen hydroxyfunktionellen Poly(meth)acrylats von 0,5 bis 8, vorzugsweise 1,2 bis 3,8 Gew.-% entsprechen.

Als (Meth)acrylsäurealkylester genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Ato-me enthaltenden Alkoholen und, weniger bevorzugt, aliphatische Kohlenwasserstoffe mit 2 bis 8 C-Atomen und 1 oder 2 Doppelbindungen.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-n-pen-tylester, (Meth)acrylsäure-iso-pentylester, (Meth)acrylsäure-2-methyl-butylester, (Meth)acryl-säureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und/oder (Meth)acrylsäure-n-dodecylester.

Als (Meth)acrylsäurealkylester bevorzugt sind solche mit einem C₁-C₁₀-Alkylrest, besonders bevorzugt sind Methylmethacrylat, Methylacrylat, Ethylacrylat, n-Butylacrylat, n-Butylmeth-acrylat, n-Hexylacrylat, n-Octylacrylat, 2-Ethylhexylacrylat und/oder 3-Propylheptylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylen-glykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2e-thyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molekulargewicht zwischen 162 und 4500, bevorzugt 250 bis 2000, Poly-1,3-propandiol oder Polypropylenglykol mit einem Molekulargewicht zwischen 134 und 2000 oder Polyethylenglykol mit einem Molekulargewicht zwischen 238 und 2000 sein.

Bevorzugt sind 2-Hydroxyethylacrylat, 2-Hydroxyethylmethacrylat, 2- oder 3-Hydroxypropyl-acrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder -me-thacrylamid können in geringen Mengen mit verwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Iso-propylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die hydroxyfunktionellen Monomere werden in die Kopolymerisation der Hydroxygruppen tragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Kopolymerisation des mindestens einen hydroxyfunktionellen Poly(meth)acrylats erfolgt in der Regel durch radikalisch initiierte wässrige Emulsionspolymerisation.

Die Durchführung von radikalisch initiierten wässrigen Emulsionspolymerisationen ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerdispersion weitere übliche Zusatzstoffe, wie beispielsweise schaum- oder viskositätsmodifizierende Additive zugesetzt.

Die radikalisch initiierte wässrige Emulsionspolymerisation kann in einem mehrstufigen Polymeristionsverfahren erfolgen. Unter einem mehrstufigen Polymerisationsverfahren ist die sequenzielle Polymerisation von zwei oder mehr voneinander getrennten Monomerenmischungen in zwei oder mehr separaten Arbeitsgängen zu verstehen.

Die radikalisch initiierte wässrige Emulsionspolymerisationen wird in der Regel in Gegenwart von 0,1 bis 5 Gew.-%, vorzugsweise 0,1 bis 4 Gew.-% und insbesondere 0,1 bis 3 Gew.-%, jeweils bezogen auf die Gesamtmonomerenmenge, eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation zu initiieren. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethyl-valeronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden und insbesondere vorteilhaft < 1 Stunde aufweist und dabei immer genügend Startradikale zur Verfügung stehen, um die Polymerisationsreaktion zu initiieren und aufrechtzuerhalten.

Als Reaktionstemperatur für die radikalisch initiierte wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 60 bis 100 °C angewendet. Die radikalisch initiierte wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm unter Sauerstoffausschluss, insbesondere unter Inertgasatmosphäre, wie beispielsweise unter Stickstoff oder Argon durchgeführt.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge nach Maßgabe des Verbrauchs kontinuierlich oder diskontinuierlich zuzugeben. In einer bevorzugten Ausführungsform wird die Gesamtmenge des Radikalinitiators im wässrigen Reaktionsmedium vor Initiierung der Polymerisationsreaktion vorgelegt.

In der Regel beträgt die Gesamtmenge an Radikalinitiatoren ≥ 0,05 und ≤ 5 Gew.-%, bevorzugt ≥ 0,1 und ≤ 3 Gew.-% und besonders bevorzugt ≥ 0,1 und ≤ 1,5 Gew.-%, jeweils bezogen auf die Gesamtmonomerenmenge.

Optional werden zur Einstellung der gewichtsmittleren Molekulargewichte radikalkettenübertragende Verbindungen (Radikalkettenregler) eingesetzt. Dabei kommen im wesentlichen aliphatische und/oder araliphatische Halogenverbindungen, wie beispielsweise n-Butyl-chlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentan-thiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentan-thiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecan-thiol und seine isomeren Verbindungen, n-Dodecanthiol und seine isomeren Verbindungen, n-Tridecanthiol und seine isomeren Verbindungen, substituierte Thiole, wie beispielsweise
2-Hydroxyethanthiol, aromatische Thiole, wie Benzolthiol, ortho-, meta-, oder para-Methyl-benzolthiol, Mercaptoalkansäure und deren Derivate, wie 3-Mercaptopropionsäure-6-methylheptylester oder 2-Mercaptoethansäure-2-ethylhexylester sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter Radikalkettenregler einzusetzen.

Die Gesamtmenge des Radikalkettenreglers kann im wässrigen Reaktionsmedium vor Initiierung der Polymerisationsreaktion vorgelegt werden. Es ist aber auch möglich, gegebenenfalls lediglich eine Teilmenge des Radikalkettenreglers im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge nach Bedarf kontinuierlich oder diskontinuierlich zuzugeben. Wesentlich ist jedoch, dass die Art und die Mengen der Radikalkettenregler so gewählt werden, dass die angegebenen gewichtsmittleren Molekulargewichte erhalten werden.

In der Regel beträgt die Menge an Radikalkettenregler 0 bis 20 Gew.-%, bevorzugt 0,05 bis 10 Gew.-% und besonders bevorzugt 0,1 bis 1 Gew.-%, jeweils bezogen auf die Gesamtmonomerenmenge.

Optional kann die Emulsionspolymerisation auch in Anwesenheit von Dispergierhilfsmitteln durchgeführt werden, welche sowohl die Monomerentröpfchen als auch Polymerisatteilchen in der wässrigen Phase dispers verteilt halten und so die Stabilität der erzeugten wässrigen Dispersionen der Dispersionspolymerisate gewährleisten. Als solche kommen sowohl die zur Durchführung von radikalischen wässrigen Emulsionspolymerisationen üblicherweise eingesetzten Schutzkolloide wie auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxylierte Mono-, Di- und Tri-Alkylphenole (EO-Grad: 3 bis 50, Alkylrest: C4 bis C12), ethoxylierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxylierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I 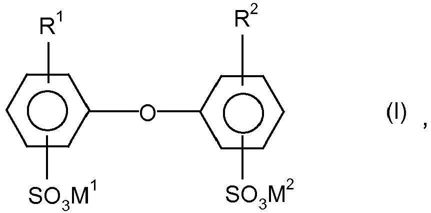 worin R¹ und R² H-Atome oder C₄- bis C₂₄-Alkyl bedeuten und nicht gleichzeitig H-Atome sind, und M¹ und M² Alkalimetallionen und/oder Ammoniumionen sein können, als geeignet erwiesen. In der allgemeinen Formel (I) bedeuten R¹ und R² bevorzugt lineare oder verzweigte Alkylreste mit 6 bis 18 C-Atomen, insbesondere mit 6, 12 und 16 C-Atomen oder Wasserstoff, wobei R¹ und R² nicht beide gleichzeitig H-Atome sind. M¹ und M² sind bevorzugt Natrium, Kalium oder Ammonium, wobei Natrium besonders bevorzugt ist. Besonders vorteilhaft sind Verbindungen (I), in denen M¹ und M² Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Werden erfindungsgemäß Dispergierhilfsmittel eingesetzt, so finden vorteilhaft anionische und/oder nichtionische und insbesondere vorteilhaft anionische Tenside Verwendung.

Es kann vorteilhaft sein, wenn als Emulgatoren solche eingesetzt werden, die bei der radikalischen Emulsionspolymerisation in das Polymer eingebaut werden. Dabei handelt es sich in der Regel um Verbindungen, die mindestens eine radikalisch polymerisierbare Gruppe tragen, bevorzugt ausgewählt aus der Gruppe bestehend aus Allyl, Acrylat, Methacrlyat und Vinylether, und mindestens einer emulgierend wirkenden Gruppe, bevorzugt ausgewählt aus der oben angegebenen Gruppe.

Dies sind beispielsweise einbaubare Emulgatoren der Marken Bisomer® MPEG 350 MA der Firma Laporte, Hitenol® BC-20 (APEO), Hitenol® BC-2020, Hitenol® KH-10 oder Noigen® RN-50 (APEO) der Firma Dai-Ichi Kogyo Seiyaku Co., Ltd., Maxemul® 6106, Maxemul® 6112, Maxemul® 5010, Maxemul® 5011 der Firma Croda, Sipomer® PAM 100, Sipomer® PAM 200, Sipomer® PAM 300, Sipomer® PAM 4000, Sipomer® PAM 5000 der Firma Rhodia, Adeka® Reasoap® PP-70, Adeka® Reasoap® NE-10, Adeka® Reasoap® NE-20, Adeka® Reasoap® NE-30, Adeka® Reasoap® NE-40, Adeka® Reasoap® SE-10N, Adeka® Reasoap® SE-1025A, Adeka® Reasoap® SR-10, Adeka® Reasoap® SR-1025, Adeka® Reasoap® SR-20, Adeka® Reasoap® ER-10, Adeka® Reasoap® ER-20, Adeka® Reasoap® ER-30, Adeka® Reasoap® ER-40 der Firma Adeka, Pluriol® A 010 R, Pluriol® A 12 R, Pluriol® A 23 R, Pluriol® A 46 R, Pluriol® A 750 R, Pluriol® A 950 R, Pluriol® A 590 I, Pluriol® A 1190 I, Pluriol® A 590 V, Pluriol® A 1190 V, Pluriol® A 5890 V, Pluriol® A 308 R und DAA ES 8761 der Firma BASF SE, Latemul® S 180 A und Latemul® S 180 der Firma Kao, Eleminol® JS-2 der Firma Sanyou Kasei, Aquaron® HS-1025 der Firma Daiichi Kogyou Seiyaku sowie C12-AMPS der Firma Lubrizol.

Die Gesamtmenge des optional eingesetzten Dispergierhilfsmittels im wässrigen Reaktionsmedium kann vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge nach Bedarf kontinuierlich oder diskontinuierlich zuzugeben. Gegebenenfalls wird eine Teilmenge (≤ 50 Gew.-%) die Dispergierhilfsmittel im Reaktionsgefäß vorgelegt und die verbleibenden Restmengen
(≥ 50 Gew.-%) kontinuierlich zudosiert.

Wesentlich ist jedoch, dass die radikalisch initiierte wässrige Emulsionspolymerisation vorteilhaft auch in Anwesenheit einer Polymersaat, beispielsweise in Anwesenheit von 0,01 bis 10 Gew.-%, häufig von 0,05 bis 7,0 Gew.-% und oft von 0,1 bis 4,0 Gew.-% einer Polymersaat, jeweils bezogen auf die Gesamtmonomerenmenge, durchgeführt werden kann.

Eine Polymersaat wird insbesondere dann eingesetzt, wenn die Teilchengröße der mittels einer radikalisch initiierten wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel einen gewichtsmittleren Durchmesser Dw ≤ 100 nm, häufig ≥ 5 nm bis ≤ 50 nm und oft ≥ 15 nm bis ≤ 35 nm aufweisen. Die Bestimmung der gewichtsmittleren Teilchendurchmesser Dw erfolgt generell nach ISO 13321 mit einem High Performance Particle Sizer der Fa. Malvern bei 22 °C und einer Wellenlänge von 633 nm.

Üblicherweise wird die Polymersaat in Form einer wässrigen Polymerisatdispersion eingesetzt.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren zuzugeben. Falls erforderlich, kann aber auch die Gesamtpolymersaatmenge im Verlauf der Polymerisation zugegeben werden. Vorzugsweise wird die Gesamtmenge an Fremdpolymersaat vor Initiierung der Polymerisationsreaktion im Polymerisationsgefäß vorgelegt.

Die wässrige Polymerdispersion c) weist in der Regel einen Feststoffgehalt im Bereich von ≥ 35 und ≤ 70 Gew.-% und vorteilhaft ≥ 40 und ≤ 60 Gew.-%, jeweils bezogen auf die wässrige Polymerdispersion c), auf. Dabei erfolgt die Bestimmung des Feststoffgehalts dergestalt, dass eine aliquote Menge (ca. 1 g) der wässrigen Polymerdispersion c) in eine Aluminiumschale mit einem Innendurchmesser von ca. 5 cm bei einer Temperatur von 120 °C bis zur Gewichtskonstanz getrocknet wird.

Zur Herstellung der wässrigen Polymerdispersion c) kann man grundsätzlich so vorgehen, dass man die aus dem Stand der Technik bekannten Verfahren zur Herstellung von Polymerdispersionen mit bi- oder höhermodaler Polymerteilchengrößenverteilung anwendet. Zu nennen sind beispielsweise das Vermischen wenigstens zweier verschiedener Polymerdispersionen mit monomodaler Teilchengrößenverteilung, wobei sich die Polymerdispersionen in ihrer mittleren Teilchengröße unterscheiden wie beispielsweise beschrieben in EP 81083 und WO 84/04491. Es ist außerdem möglich, die wässrige Polymerdispersion c) durch eine radikalisch initiierte wässrige Emulsionspolymerisation ethylenisch ungesättigter Monomere in Gegenwart zwei verschiedener Saatlatices, die sich in ihrer mittleren Teilchengröße unterscheiden, herzustellen. Ein solches Verfahren ist ebenfalls beschrieben in EP 81083. Zur Herstellung der wässrigen Polymerdispersion c) kann man auch so vorgehen, dass man eine radikalisch initiierte wässrige Emulsionspolymerisation der Monomere nach einem Monomerzulaufverfahren durchführt, bei dem man im Verlauf der Polymerisation, wenn bereits ein Teil der Monomere polymerisiert ist, eine größere Emulatormenge zusetzt, welche die Bildung einer neuen Teilchengeneration initiiert. Ein solches Verfahren ist beispielsweise aus EP 8775 bekannt.

Für die wässrige Polymerdispersion c) ist es auch möglich, das im Folgenden beschriebene Verfahren einer radikalisch initiierten wässrigen Emulsionspolymerisation der das Polymer konstituierenden Monomere anzuwenden. Bei diesem Verfahren führt man eine radikalisch initiierte wässrige Emulsionspolymerisation der Monomere nach einem Monomerzulaufverfahren durch, wobei man im Polymerisationsgefäß wenigstens eine Polymersaat 1 vorlegt und wobei man im Verlauf der Polymerisation wenigstens eine weitere Polymersaat 2 in Form einer wässrigen Dispersion zugibt.

Unter einem Monomerzulaufverfahren versteht man hier und im Folgenden, dass man wenigstens 95 % und insbesondere wenigstens 99 % der zu polymerisierenden Monomere unter Polymerisationsbedingungen in einen Polymerisationsgefäß gibt, in dem sich bereits eine erste Polymersaat, typischerweise in Form einer wässrigen Dispersion, befindet.

Die Zugabe des der Polymersaat 2 erfolgt in der Regel frühestens dann, wenn sich bereits wenigstens 10 Gew.-% und insbesondere wenigstens 20 Gew.-% der zu polymerisierenden Monomere im Polymerisationsgefäß befinden. Die Zugabe der Polymersaat 2 wird in der Regel spätestens dann beendet, wenn sich 90 %, insbesondere 80 %, besonders bevorzugt 70 % oder speziell 60 % der zu polymerisierenden Monomere im Reaktionsgefäß befinden. Die Zugabe der Polymersaat 2 kann in einer Portion, in mehreren Portionen oder kontinuierlich erfolgen. Besonders bevorzugt ist ein so genannter "Saatschuss", d. h. die Polymersaat wird über einen kurzen Zeitraum, der in der Regel 5 Minuten nicht überschreitet, unter Polymerisationsbedingungen in den Polymerisationsgefäß gegeben. Der Saatschuss erfolgt typischerweise, wenn sich 10 bis 90 Gew.-%, insbesondere 10 bis 80 Gew.-%, besonders bevorzugt 15 bis 70 Gew.-% und speziell 20 bis 60 Gew.-% der zu polymerisierenden Monomere im Polymerisationsgefäß befinden.

Zur Herstellung einer zweikomponentigen Beschichtungsmasse werden die Polyisocyanatkomponente und die Polyacrylatkomponente miteinander vermischt.

Die Vermischung erfolgt üblicherweise durch das Einrühren der Polyisocynatkomponente in die Polyacrylatkomponente oder der Polyacrylatkomponente in die Polyisocynatkomponente
Grundsätzlich kann die Vermischung der Polyisocynatkomponente und der Polyacrylatkomponente nach verschiedenen Methoden erfolgen, beispielsweise durch Einrührung per Hand, durch Schütteln, durch Einrührung per Laborrührer bei bestimmten Drehzahlen sowie bei Spritzapplikationen durch das Zusammenbringen und Mischen der zwei Komponenten innerhalb der Spritzdüse. Bevorzugt erfolgt die Vermischung mittels Handeinrührung. Die verschiedenen Methoden unterscheiden sich in bezug auf die Scherung und es eignen sich für bestimmte Mischmethoden nur Systeme (Isocyanate und formulierte Dispersionen) mit ausreichender Stabilisierung und adäquatem rheologischen Verhalten.

Das Molverhältnis der Isocyanatgruppen der Polyisocyanatkomponente und der Hydroxylgruppen der Polyacrylatkomponente beträgt in der Regel von 0,2:1 bis 5:1, bevorzugt 0,8:1 bis 1,6:1 und speziell 0,9:1 bis 1,1:1.

Die zweikomponentige Beschichtungsmasse eignet sich insbesondere zur Verwendung in Lacken und Anstrichfarben.

Wird die vorgenannte zweikomponentige Beschichtungsmasse zur Herstellung von Lacken und Anstrichmitteln eingesetzt, so kann die zweikomponentige Beschichtungsmasse noch zusätzlich Pigmente, Füllstoffe, Dispergiermittel, Verdicker, Konservierungsmittel, Filmbildehilfsmittel, Verlaufs- und Benetzungshilfsmittel, Lösemittel, Neutralisationmittel, Entschäumer, Lichtschutzmittel und/oder Korrosionsschutzmittel enthalten.

Dabei können als Pigmente prinzipiell alle dem Fachmann geläufigen organischen und/oder anorganischen Weiß- bzw. Buntpigmente mit einer Teilchengröße ≤ 10000 nm (Brock, Groteklaes, Mischke, Lehrbuch der Lacktechnologie 2. Auflage, Hrsg. U. Zorll, Vincentz Verlag 1998, S.113) eingesetzt werden.

Als wichtigstes Weißpigment ist aufgrund seines hohen Brechungsindex (Rutil: 2,70 und Anatas: 2,55) und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden.

Selbstverständlich kann die zweikomponentige Beschichtungsmasse zusätzlich zu den Pigmenten noch sogenannte, dem Fachmann geläufige Füllstoffe enthalten. Als Füllstoffe werden im Wesentlichen pulverförmige anorganische Materialien mit einer Teilchengröße ≤ 10000 nm (Brock, Groteklaes, Mischke, Lehrbuch der Lacktechnologie 2. Auflage, Hrsg. U. Zorll, Vincentz Verlag 1998, S.113) mit im Vergleich zu den Pigmenten geringerem Brechungsindex verstanden (weiße Füllstoffe weisen nach DIN 55943 und DIN 55945 Brechungsindexwerte < 1,7 auf).

Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Als Korrosionsschutzmittel, kommen erfindungsgemäß insbesondere Korrosionsinhibitoren oder Korrosionsschutzpigmente in Betracht.

Beispiele für Korrosionsinhibitoren sind aufgeführt in "Corrosion Inhibitors.2nd Edition. An industrial Guide", Ernest W. Flick, Ed: William Andrew Inc ISBN: 978-0-8155-1330-8. Bevorzugte Korrosionsinhibitoren sind Hexamin, Benzotriazol, Phenylendiamin, Dimethylethanolamin, Polyanilin, Natriumnitrit, Zimtaldehyd, Kondensationsprodukte von Aldehyden und Aminen (Imine), Chromate, Nitrite, Phosphate, Hydrazin und Ascorbinsäure.

Beispiele für Korrosionsschutzpigmente sind modifizierte Zink-Orthophosphate (beispielsweise HEUCOPHOS® ZPA, ZPO and ZMP), Polyphosphate (beispielsweise HEUCOPHOS® ZAPP, SAPP, SRPP and CAPP), WSA - Wide Spectrum Anticorrosives (beispielsweise HEUCOPHOS® ZAMPLUS and ZCPPLUS) und modifizierte Silikat-Pigmente (beispielsweise HEU-COSIL® CTF, Halox® 750), beispielsweise der Firma Heubach GmbH, sowie Bariumborphosphat (beispielsweise Halox® 400), Bariumphosphosilikate (beispielsweise Halox® BW-111, Halox® BW-191), Calciumborosilikate (beispielsweise Halox® CW-291, CW-22/221, CW-2230), Calciumphosphosilikat (beispielsweise Halox® CW-491), Strontiumphosphosilikat (beispielsweise Halox® SW-111) oder Strontiumzinkphosphosilikat (beispielsweise Halox® SZP-391) der Firma Halox®.

Die Trocknung ist dem Fachmann geläufig und erfolgt beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist. Das Trocknen kann bei einer Temperatur von Umgebungstemperatur bis 100 °C über einen Zeitraum von wenigen Minuten bis mehreren Tagen erfolgen.

Die Zweikomponenten-Beschichtungsmassen, insbesondere zur Verwendung in Lacken und Anstrichmitteln, eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, wie Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.
Insbesondere werden die erfindungsgemäßen Beschichtungsmassen als Klarlacke oder pigmentiert bzw. mit Füllern ausgestattet in Grundierungen, Basis-, Zwischen- oder Decklacken eingesetzt.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen sowie Anwendungen auf Holz (Böden, Möbel) bzw. Bodenbeschichtungen.
Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

### Beispiele

### Herstellung und Charakterisierung der Polymerdispersionen

Die Hydroxyzahlen der Dispersionspolymerisate wurden generell gemäß DIN 53240-2 (November 2007) (potentiometrisch bei einer Acetylierungszeit von 20 Minuten) bestimmt.

Die Feststoffgehalte wurden generell bestimmt, indem eine definierte Menge der wässrigen Polymerdispersion (ca. 0,8 g) mit Hilfe des Feuchtebestimmers HR73 der Firma Mettler Toledo bei einer Temperatur von 130 °C bis zur Gewichtskonstanz getrocknet wurde. Es werden jeweils zwei Messungen durchgeführt und der Mittelwert dieser beiden Messungen angegeben.

Die gewichtsmittleren Teilchengrößen (Dw) wurde nach ISO 13321 mit einem High Performance Particle Sizer der Fa. Malvern bei 22 °C und einer Wellenlänge von 633 nm bestimmt.

### Polymerdispersion P1

In einem mit Dosiereinrichtungen und Temperaturreglung ausgerüsteten 2 I Polymerisationsgefäß wurden bei 20 bis 25 °C (Raumtemperatur) unter Stickstoffatmosphäre

| | |
|---|---|
| 349,0 g | entionisiertes Wasser, und |
| 16,7 g | einer 33 gew.-%igen Polystyrolsaat (Partikelgröße 30 nm mit 16 Gewichtsteilen Emulgator Disponil® LDBS 20 der Fa. BASF) |

vorgelegt und unter Rühren auf 85 °C aufgeheizt. Bei Erreichung dieser Temperatur wurde 1,6 g einer 7 gew.-%igen wässrigen Lösung von Natriumperoxodisulfat zugegeben und während fünf Minuten gerührt.

Anschließend wurde unter Aufrechterhaltung der Temperatur Zulauf 1 und Zulauf 2 innerhalb von 150 Minuten bei gleichbleibendem Mengenstrom kontinuierlich zudosiert. Daran anschließend wurden dem Polymerisationsgemisch 0,66 g einer 25 gew.-%igen wässrigen Ammoniaklösung zugegeben. Danach ließ man das Polymerisationsgemisch noch 45 Minuten bei 85 °C nachreagieren. Danach wurde die erhaltenen wässrige Polymerdispersion auf Raumtemperatur abgekühlt mit einer 25 gew.-%igen Ammoniaklösung auf pH=7 eingestellt und über einen 125 µm Filter filtriert.

**Zulauf 1 (homogene Mischung aus):**

| | |
|---|---|
| 234,5 g | entionisiertes Wasser, |
| 25,8 g | Disponil® FES 77 der Fa. BASF (32 gew.-%ig), |
| 103,8 g | 2-Hydroxyethylmethacrylat, |
| 8,3 g | Methacrylsäure, |
| 154,0 g | n-Butylacrylat, |
| 286,0 g | Methylmethacrylat und |
| 1,7 g | 2-Ethylhexylthioglykolat |

### Zulauf 2:

### 37,7 g einer 7 gew.-%igen Lösung von Natriumperoxodisulfat

Die erhaltene Polymerdispersion wies einen Feststoffgehalt von 44,8 Gew.-% auf. Der gewichtsmittlere Teilchendurchmesser Dw der erhaltenen Dispersionspartikel betrug 132 nm. Die Hydroxyzahl des Dispersionspolymerisats wurde zu 79,8 mg KOH/g bestimmt.

### Polymerdispersion P2

Die Herstellung der Polymerdispersion P2 erfolgte völlig analog der Herstellung von P1 mit dem Unterschied, dass anstelle der Polystyrolsaat 8,6 g Disponil® FES 77 der Fa. BASF (32 gew.-%ig) vorgelegt wurden.

Die erhaltene Polymerdispersion wies einen Feststoffgehalt von 44,9 Gew.-% auf. Der gewichtsmittlere Teilchendurchmesser der erhaltenen Dispersionspartikel betrug 113 nm. Die Hydroxyzahl des Dispersionspolymerisats wurde zu 79,8 mg KOH/g bestimmt.

### Polymerdispersion P3

Die Herstellung der Polymerdispersion P3 erfolgte völlig analog der Herstellung von P1 mit dem Unterschied, dass hier 1,5 g der 33 gew.-%igen Polystyrolsaat vorgelegt wurden.

Die erhaltene Polymerdispersion wies einen Feststoffgehalt von 44,9 Gew.-% auf. Der gewichtsmittlere Teilchendurchmesser der erhaltenen Dispersionspartikel betrug 281 nm. Die Hydroxyzahl des Dispersionspolymerisats wurde zu 79,6 mg KOH/g bestimmt.

### Anwendungstechnische Prüfung

### Formulierung der Polyacrylatkomponente

### Die Polymerdispersion P1 dient als monomodales Vergleichsbeispiel.

Aus Polymerdispersion P2 und Polymerdispersion P3 wurde durch eine 1:1 Abmischung (bezogen auf Gewicht der Dispersion) eine Polyacrylatkomponente mit bimodaler Teilchengrößenverteilung B1 hergestellt.
Die monomodale Polyacrylatkomponente VB1 wie auch die Polyacrylatkomponente mit bimodaler Teilchengrößenverteilung B1 wurden wie folgt formuliert:
Es wurden 200 g der Polymerdispersion vorgelegt. Im Vergleichsbeispiel 1 bestanden diese 200 g im vollen Umfang aus der monomodalen Polymerdispersion P1. Im Beispiel 1 bestanden diese 200 g aus jeweils 100 g der Polymerdispersion P2 und der Polymerdispersion P3 (durch vorheriges Abmischen, vgl. oben). Es wurde bei ca. 600 U/min mit einem Laborrührer mit Dissolverscheibe (Dispermat®) gerührt und unter Rühren nacheinander folgende Komponenten zugegeben: 1 g Byk® 340 (polymeres Fluortensid, Verlaufs- und Benetzungshilfsmittel), 5 g Butyldiglykolacetat (Lösemittel, Filmbildehilfsmittel), 13 g Butylglykolacetat (Lösemittel, Filmbildehilfsmittel), 1.4 g eines Gemisches aus Dimethylethanolamin/Wasser (1:1 bezogen auf Gewicht) (Base zum Einstellen des pH-Wertes) sowie 3.1 g destilliertes Wasser. Anschließend wurde 30 min. bei 1000 U/min gerührt. Nach Stehenlassen über Nacht wurde der pH-Wert überprüft und ggf. mit einem Gemisch aus Dimethylethanolamin/Wasser (1:1 bezogen auf Gewicht) nachgestellt, so daß der pH-Wert im Bereich von 8,2 bis 8,5 lag. Es wurden hierbei ca. 224 g formulierte Dispersionskomponente erhalten, aus der durch Zugabe der Isocyanatkomponente (siehe unten) die Zweikomonentenbeschichtungsmasse hergestellt wurde.

| Viskosität mPas* | Monomodal = Dispersion P1 bzw. VB1 | Bimodal= Dispersion P2:P3 (1:1) bzw. B1 | Feinteilige Dispersion P2 | Grobteilige Dispersion P3 |
|---|---|---|---|---|
| Reine Dispersion | 56 | 37 | 92 | 33 |
| Formulierte Komponente | 157 | 175 | 407 | 37200** |

| | | | | |
|---|---|---|---|---|
| *falls nicht anders angegeben, Bestimmung mittels Brookfield RVT Viskosimeter, Verwendung der Spindel 3 bei 100 U/min, 23 °C **Bestimmung mittels Brookfield RVT Viskosimeter, Verwendung der Spindel 7 bei 50 U/min, 23 °C | | | | |

### Polyisocyanatkomponente

Als Polyisocyanatkomponenten wurden verwendet:
- Bayhydur® 3100 = hydrophil modifiziertes aliphatisches Polyisocyanat der Fa. Bayer Material-Science
- Easaqua® X D 803 = aliphatisches Polyisocyanat in Lösung (70%ig in 3-Methoxy-*n*-butylacetat) der Fa. Vencorex
Die Polyisocyanatkomponenten wurden nach verschiedenen Methoden in die jeweilige Polyacrylkomponente eingebracht:

### -Handeinrührung

Bayhydur® 3100 wurde hierbei als 70Gew.-% Lösung in 3-Methoxy-*n*-butylacetat verwendet; Easaqua® X D 803 wurde in Lieferform verwendet. Nach Mischen der Polyacrylatkomponente mit der Polyisocyanatkomponente wurde 30 sek. gewartet und anschließend von Hand 30 sek. lang mit einem Holzspatel eingerührt. Im Anschluß wurde mit destilliertem Wasser auf einen Feststoffgehalt von 40% eingestellt.

### -Einrührung mit einem Laborrührer (Dispermat®)

Die Polyisocyanatkomponenten wurden hierbei in Lieferform verwendet. Die Dispersion wurde bei 500 U/min gerührt, und die Zugabe des Isocyanats und einer berechneten Menge Wasser (die zu einem Endfeststoffgehalt von 40% führt) erfolgte während 2-3 min. Anschließend wurde die Rührgeschwindigkeit auf 1000 U/Min erhöht und 5 min. lang gerührt.

### -Menge der verwendeten Polyisocyanatkomponente

Es wurde in einem "Index" von 100 gemischt, d.h. so, daß im Lack Hydroxylgruppen und Isocyanatgruppen in einem stöchiometrischen Verhältnis von 1:1 vorliegen.

### Anwendungstechnische Prüfung

### Viskosität

Die Viskosität wurde mit einem Brookfield-RVT-Viskosimeter bei Raumtemperatur, Spindel 3 bei 100 U/Min gemessen.

### Sandtrocknung

Die Lackfilme wurden auf Glas gerakelt (180 µ Naßschichtdicke) und direkt dem Sandtest unterzogen. Das hierfür verwendete Gerät besteht aus einem zylindrischen Trichter, welcher sich mit einer bestimmten konstanten Geschwindigkeit über den Lackfilm bewegt (1 cm/h = Entfernung/Zeit, d.h. die Entfernung entspricht einer bestimmten Trocknungszeit), beginnend an dem einen Ende des Lackfilms. Während der Bewegung über den Lackfilm rieselt Sand auf den trocknenden Lackfilm. An den Stellen (= Trocknungszeiten), an denen die Lackoberfläche noch nicht vollständig getrocknet ist, ist der Film noch klebrig und der Sand bleibt auf diesen Stellen haften. Wenn demgegenüber die Oberflächentrocknung abgeschlossen ist, kann der auf dem Lackfilm liegende Sand an diesen Stellen einfach mit einem Pinsel abgewischt werden. Die Strecke, auf welcher Sand auf der Lackoberfläche haften bleibt, entspricht der Zeit, die der Lack benötigt, um eine klebfreie Oberfläche zu bilden.

### Glanz

Lackfilme wurden auf eine Byk® Gloss-Card aufgerakelt (100 µ Naßschichtdicke). Der Glanz wurde im schwarzen Bereich der Gloss-Card mit einem Byk-Gardner Gloss/Haze-Meßgerät gemessen.

Verwendung von per Laborrührer eingerührtem Bayhydur® 3100

| | Monomodal | Bimodal |
|---|---|---|
| Polyacrylatkomponente | 45 g VB1 | 45 g B1 |
| Polyisocyanatkomponente | 6,2 g Bayhydur® 3100 | 6,2 g Bayhydur® 3100 |
| Wasser (vollentsalzt) | 9,4 g | 9,4 g |
| Viskosität | 62 mPas | 45 mPas |
| Filmoptik | Stippen, klar | wenig Stippen, klar |
| Sandtrocknung | 1,3 h | 1,2 h |
| Glanz 20 ° | 73 | 72 |
| Glanz 60 ° | 88 | 87 |

Verwendung von per Hand eingerührtem Bayhydur® 3100

| | Monomodal | Bimodal |
|---|---|---|
| Polyacrylatkomponente | 45 g VB1 | 45 g B1 |
| Polyisocyanatkomponente | 8,9 g Bayhydur® 3100 (70%ig in 3-Methoxy-*n*-butylacetat) | 8,9 g Bayhydur® 3100 (70%ig in 3-Methoxy-*n*-butylacetat) |
| Wasser (vollentsalzt) | 6,7 g | 6,7 g |
| Viskosität | 69 mPas | 56 mPas |
| Filmoptik | trüb, keine Stippen | trüb, keine Stippen |
| Sandtrocknung | 1,5 h | 1 h |
| Glanz 20 ° | 1,5 | 2,7 |
| Glanz 60° | 14 | 21 |

Verwendung von per Hand eingerührtem Easaqua® X D 803

| | Monomodal | Bimodal |
|---|---|---|
| Polyacrylatkomponente | 45 g VB1 | 45 g B1 |
| Polyisocyanatkomponente | 8,7 g Easaqua® X D 803 | 8,7 g Easaqua® X D 803 |
| Wasser (vollentsalzt) | 6,6 g | 6,6 g |
| Viskosität | 152 mPas | 76 mPas |
| Filmoptik | viele Stippen, klar | weniger Stippen, klar |
| Sandtrocknung | 1,3 h | 1 h |
| Glanz 20 ° | 47 | 61 |
| Glanz 60 ° | 77 | 85 |

Verwendung von per Laborrührer eingerührtem Easaqua® X D 803

| | Monomodal | Bimodal |
|---|---|---|
| Polyacrylatkomponente | 45 g VB1 | 45 g B1 |
| Polyisocyanatkomponente | 9,1 g Easaqua® X D 803 | 9,11 g Easaqua® X D 803 |
| Wasser (vollentsalzt) | 0,4 g | 0,4 g |
| Viskosität | 287 mPas | 79 mPas |
| Filmoptik | leicht trüb, Stippen | Schleier, minimal Stippen |
| Sandtrocknung | n.b. | n.b. |
| Glanz 20 ° | n.b. | n.b. |
| Glanz 60 ° | n.b. | n.b.- |

| | | |
|---|---|---|
| n.b.: Nicht bestimmt | | |

## Patentansprüche

1. Zweikomponentige Beschichtungsmassen enthaltend eine wasserdispergierbare Polyisocyanatkomponente,enthaltend
a) mindestens ein Polyisocyanat und
b) mindestens ein Umsetzungsprodukt mindestens eines Polyisocyanats b1) mit Verbindungen b2) mit mindestens einer hydrophilen, nicht gegenüber Isocyanat reaktiven Gruppe (Gruppe A) und mindestens einer gegenüber Isocyanat reaktiven Gruppe (Gruppe B)
und
eine Polyacrylatkomponente enthaltend
eine wässrige Polymerdispersion c) mindestens eines hydroxyfunktionellen Poly(meth)acrylats mit bi- oder höhermodaler Teilchengrößenverteilung.

2. Zweikomponentige Beschichtungsmassen nach Anspruch 1, wobei die bi- oder höhermodale Teilchengrößenverteilung **dadurch gekennzeichnet ist, dass** der Unterschied zwischen den gewichtsmittleren Durchmessern der kleineren und der größeren Teilchen mindestens 50 nm beträgt.

3. Zweikomponentige Beschichtungsmassen nach Anspruch 1 oder 2, wobei die bi- oder höhermodale Teilchengrößenverteilung **dadurch gekennzeichnet ist, dass** der gewichtsmittlere Durchmesser der kleineren Teilchen im Bereich von 20 bis 300 nm und der gewichtsmittere Durchmesser der größeren Teilchen im Bereich von 150 bis 700 nm liegt.

4. Zweikomponentige Beschichtungsmassen nach mindestens einem der Ansprüche 1 bis 3, wobei die bi- oder höhermodale Teilchengrößenverteilung **dadurch gekennzeichnet ist, dass** das Gewichtsverhältnis zwischen den großen Teilchen und den kleinen Teilchen im Bereich von 40:60 bis 85:15 liegt.

5. Zweikomponentige Beschichtungsmassen nach mindestens einem der Ansprüche 1 bis 4, **dadurch gekennzeichnet, dass** der Feststoffgehalt der wässrigen Polymerdispersion c) im Bereich von 35 bis 70 Gew.-%, bezogen auf das Gesamtgewicht liegt.

6. Zweikomponentige Beschichtungsmassen nach mindestens einem der Ansprüche 1 bis 5, **dadurch gekennzeichnet, dass** das Molverhältnis der Isocyanatgruppen der Polyisocyanatkomponente zu den Hydroxylgruppen der Polyacrylatkomponente im Bereich von 0,2:1 bis 5:1 liegt.

7. Zweikomponentige Beschichtungsmassen nach mindestens einem der Ansprüche 1 bis 6, **dadurch gekennzeichnet, dass** das mindestens eine hydroxyfunktionelle Poly(meth)acrylat eine OH-Zahl bestimmt gemäß DIN 53240-2 von 15 bis 250 mg KOH/g aufweist

8. Verfahren zur Herstellung der zweikomponentigen Beschichtungsmassen gemäß mindestens einem der Ansprüche 1 bis 7, **dadurch gekennzeichnet, dass** die Polyisocyanatkomponente und die Polyacrylatkomponente miteinander vermischt werden.

9. Verwendung einer zweikomponentigen Beschichtungsmassen nach einem der Ansprüche 1 bis 7 in Lacken und Anstrichmitteln.

10. Verwendung einer zweikomponentigen Beschichtungsmassen nach einem der Ansprüche 1 bis 7 zum Beschichten von Substraten.

## Claims

1. A two-component coating composition comprising a water-dispersible polyisocyanate component, comprising
a) at least one polyisocyanate and
b) at least one reaction product of at least one polyisocyanate b1) with compounds b2) having at least one hydrophilic, non-isocyanate-reactive group (group A) and at least one isocyanate-reactive group (group B)
and
a polyacrylate component comprising
an aqueous polymer dispersion c) of at least one hydroxy-functional poly(meth)acrylate with bimodal or polymodal particle size distribution.

2. The two-component coating composition as claimed in claim 1, wherein the bimodal or polymodal particle size distribution is **characterized in that** the difference between the weight-average diameters of the smaller and the larger particles is at least 50 nm.

3. The two-component coating composition as claimed in claim 1 or 2, wherein the bimodal or polymodal particle size distribution is **characterized in that** the weight-average diameter of the smaller particles is in the range from 20 to 300 nm and the weight-average diameter of the larger particles is in the range from 150 to 700 nm.

4. The two-component coating composition as claimed in at least one of claims 1 to 3, wherein the bimodal or polymodal particle size distribution is **characterized in that** the weight ratio between the large particles and the small particles is in the range from 40:60 to 85:15.

5. The two-component coating composition as claimed in at least one of claims 1 to 4, wherein the solids content of the aqueous polymer dispersion c) is in the range from 35 to 70 wt%, based on the total weight.

6. The two-component coating composition as claimed in at least one of claims 1 to 5, wherein the molar ratio of the isocyanate groups in the polyisocyanate component to the hydroxyl groups in the polyacrylate component is in the range from 0.2:1 to 5:1.

7. The two-component coating composition as claimed in at least one of claims 1 to 6, wherein the at least one hydroxy-functional poly(meth)acrylate has an OH number determined according to DIN 53240-2 of 15 to 250 mg KOH/g.

8. A method for producing the two-component coating composition as claimed in at least one of claims 1 to 7, wherein the polyisocyanate component and the polyacrylate component are mixed with one another.

9. The use of a two-component coating composition as claimed in any of claims 1 to 7 in coating materials and paints.

10. The use of a two-component coating composition as claimed in any of claims 1 to 7 for coating substrates.

## Revendications

1. Matériaux de revêtement bicomposants, contenant un composant polyisocyanate dispersible dans l'eau, contenant :
a) au moins un polyisocyanate et
b) au moins un produit de réaction d'au moins un polyisocyanate b1) avec des composés b2) contenant au moins un groupe hydrophile, non réactif avec les isocyanates (groupe A), et au moins un groupe réactif avec les isocyanates (groupe B),
et
un composant polyacrylate, contenant :
une dispersion de polymère aqueuse c) d'au moins un poly(méth)acrylate à fonction hydroxy présentant une distribution des tailles de particules bimodale ou d'une modalité supérieure.

2. Matériaux de revêtement bicomposants selon la revendication 1, dans lesquels la distribution des tailles de particules bimodale ou d'une modalité supérieure est **caractérisée en ce que** la différence entre les diamètres moyens en poids des particules plus petites et des particules plus grandes est d'au moins 50 nm.

3. Matériaux de revêtement bicomposants selon la revendication 1 ou 2, dans lesquels la distribution des tailles de particules bimodale ou d'une modalité supérieure est **caractérisée en ce que** le diamètre moyen en poids des particules plus petites se situe dans la plage allant de 20 à 300 nm et le diamètre moyen en poids des particules plus grandes se situe dans la plage allant de 150 à 700 nm.

4. Matériaux de revêtement bicomposants selon au moins l'une quelconque des revendications 1 à 3, dans lesquels la distribution des tailles de particules bimodale ou d'une modalité supérieure est **caractérisée en ce que** le rapport en poids entre les grandes particules et les petites particules se situe dans la plage allant de 40:60 à 85:15.

5. Matériaux de revêtement bicomposants selon au moins l'une quelconque des revendications 1 à 4, **caractérisés en ce que** la teneur en solides de la dispersion de polymère aqueuse c) se situe dans la plage allant de 35 à 70 % en poids, par rapport au poids total.

6. Matériaux de revêtement bicomposants selon au moins l'une quelconque des revendications 1 à 5, **caractérisés en ce que** le rapport molaire entre les groupes isocyanate du composant polyisocyanate et les groupes hydroxyle du composant polyacrylate se situe dans la plage allant de 0,2:1 à 5:1.

7. Matériaux de revêtement bicomposants selon au moins l'une quelconque des revendications 1 à 6, **caractérisés en ce que** ledit au moins un poly(méth)acrylate à fonction hydroxy présente un indice OH déterminé selon DIN 53240-2 de 15 à 250 mg de KOH/g.

8. Procédé de fabrication des matériaux de revêtement bicomposants selon au moins l'une quelconque des revendications 1 à 7, **caractérisé en ce que** le composant polyisocyanate et le composant polyacrylate sont mélangés l'un avec l'autre.

9. Utilisation d'un matériau de revêtement bicomposant selon l'une quelconque des revendications 1 à 7 dans des vernis et des peintures.

10. Utilisation d'un matériau de revêtement bicomposant selon l'une quelconque des revendications 1 à 7 pour le revêtement de substrats.
